# EUROPÄISCHE PATENTSCHRIFT

(11) **EP 1 535 504 B1**
(45) Veröffentlichungstag und Bekanntmachung des Hinweises auf die Patenterteilung: **20.02.2008**
(21) Anmeldenummer: 04006626.8
(22) Anmeldetag: 19.03.2004
(51) Int. Cl.: A01D 34/73, A01D 34/00

(54) **Messer für ein Sichelmähwerk**
Blade for a sickle mower
Lame de coupe pour une tondeuse

(30) Priorität: 28.11.2003 DE 10355749
(43) Veröffentlichungstag der Anmeldung: 01.06.2005
(73) Patentinhaber: Schell Grüntechnik GmbH, 52076 Aachen (DE)
(72) Erfinder: Schell, Franz-Josef, 52076 Aachen (DE); Schell, Oliver, 52076 Aachen (DE)
(74) Vertreter: Kohlmann, Kai

(56) Entgegenhaltungen:
- EP-A1- 1 360 888
- DE-U1- 20 108 805
- GB-A- 2 310 583
- US-A- 5 515 670
- US-A- 5 537 808
- US-A- 5 669 213
- US-A1- 2003 101 706

## Beschreibung

Die Erfindung betrifft ein Messer für ein Sichelmähwerk mit mindestens zwei Messerflügeln, deren in Rotationsrichtung vordere Kanten eine Schneide aufweisen, wobei auf der Oberfläche jedes Messerflügels in Höhe der Schneide mindestens zwei Nachschneidemesser angeordnet sind und jedem Nachschneidemesser eine Öffnung in dem Messerflügel zugeordnet ist.

Sichelmähwerke werden häufig bei der Landschaftspflege von großen Grünflächen eingesetzt. Kommunale und gewerbliche Betriebe der Landschaftspflege stehen bei der Pflege unter enormem Kostendruck. Gleichzeitig steigen die Ansprüche an den Pflege-Qualitätsstandard der Grünflächen. Aus diesem Grund besteht das Bedürfnis, dass selbst bei lang gewachsenem Schnittgut auf eine niedrige Höhe abgeschnitten werden kann, ohne dass das Schnittgut entfernt werden muss. Hierzu ist es erforderlich, dass das Schnittgut von dem Messer des Sichelmähwerks nicht nur abgeschnitten, sondern auch nachzerkleinert wird.

Die Fa. Schell Grüntechnik hat für diesen Nachzerkleinerungsprozess in das Mähgehäuse eines Sichelmähwerks einschraub- bzw. eindrehbare Einbausätze entwickelt, an denen das Schnittgut nachzerkleinert wird.

Aus der DE 44 34 272 C1 ist ein Sichelmähwerk mit Zerkleinerungswirkung bekannt. In zwei beim Mähen nebeneinander angeordneten Mähgehäusen rotiert jeweils ein zweiflügeliges Messer, das drehfest mit einer vertikalen Antriebswelle verbunden ist, von der sich die Messerflügel in beide Richtungen erstrecken. Eine in Rotationsrichtung vordere Kante der Messerflügel ist zu einer Schneide geschliffen. Ein hinterer Randbereich jeweils eines Messerflügels ist als Leitschaufel schräg nach oben gebogen, während ein hinterer Randbereich des jeweils anderen Messerflügels schräg nach unten gebogen ist. Diese Leitschaufeln wirbeln bei der Rotation der Messer das Schnittgut auf bzw. drücken das Schnittgut wieder nach unten. Das Schnittgut gelangt dadurch nach dem Abschneiden mehrfach in den Bereich der Schneiden und wird dabei nachzerkleinert. Am Messerumfang weisen die nebeneinander angeordneten Mähgehäuse eine Durchtrittsöffnung zum benachbarten Messer auf. Durch diese Durchtrittsöffnung gelangt ein Teil des abgeschnittenen Schnittgutes in den Wirkungsbereich des benachbarten Messers.

Probleme ergeben sich bei diesem Sichelmähwerk bei nassem und hohem Schnittgut. Insbesondere an den Durchtrittsöffnungen kann es dann zu Verstopfungen kommen, die eine Unterbrechung des Mähens und eine Reinigung erforderlich machen. Auch die Zerkleinerungswirkung und Verteilung des Schnittgutes ist nicht unter allen Betriebsbedingungen optimal. Schließlich wird zunehmend die recht hohe Geräuschentwicklung bekannter Sichelmähwerke, insbesondere bei der Pflege von Grünflächen in dicht bebauten Gebieten, als störend empfunden.

Die US 55 15 670 A offenbart ein Messer für ein Sichelmähwerk mit mindestens zwei Messerflügeln, deren in Rotationsrichtung vordere Kanten eine Schneide aufweisen. Auf der Oberfläche jedes Messerflügels sind etwa in Höhe der Schneide vier Nachschneidemesser angeordnet. Die Nachschneidemesser sind aus dem Messerflügel herausgeschnitten, so dass sich in den Messerflügeln unterhalb der Nachschneidemesser dreieckige Öffnungen befinden. Die Messerflügel weisen im in Rotationsrichtung hinteren Randbereich eine zweite Reihe von Nachschneidemessern auf, die sich etwa auf Höhe der Schneide jedes Messerflügels in Rotationsrichtung hinter der ersten Reihe der Nachschneidemesser befinden. Der höchste Punkt der Nachschneidemesser in zweiter Reihe ist höher als der höchste Punkte der Nachschneidemesser auf der Oberfläche jedes Messerflügels.

Ausgehend von diesem Stand der Technik liegt der Erfindung die Aufgabe zugrunde, ein Messer für ein Sichelmähwerk zu schaffen, das bei geringer Lärmentwicklung im Betrieb des Mähwerks eine gleichmäßige Verteilung des Schnittguts bei verbesserter Zerkleinerung gewährleistet.

Diese Aufgabe wird bei einem Messer der eingangs erwähnten Art dadurch gelöst,
- dass jedes Nachschneidemesser einen Aufstellwinkel gegenüber der Oberfläche des Messerflügels von 30° - 60 aufweist,
- dass jeder Messerflügel im in Rotationsrichtung hinteren Randbereich eine Leiteinrichtung (22, 23) aufweist und
- die Leiteinrichtung von einem schräg aus der Flügelebene nach oben abgebogenen Abschnitt des Messerflügels gebildet wird, wobei der höchste Punkt des abgebogenen Abschnitts gegenüber der Ebene des Messerflügels einen Abstand von 3 - 15 mm aufweist, und die Biegelinie Schräg zur Längsachse der Messers vom äußeren Rand zum hinteren Randbereich des Messerflügels verläuft.

Die Nachschneidemesser sind vorzugsweise mit Abstand zu den Rändern des Messerflügels auf dessen Oberfläche angeordnet. Sie befinden sich insbesondere in Rotationsrichtung hinter der Längsachse des Messers, die durch dessen Rotationsachse verläuft. Die jedem Nachschneidemesser zugeordnete Öffnung ist ein Durchgang, dessen Rand allseitig von dem Material des Messerflügels umgeben ist.

In Versuchen hat es sich als vorteilhaft herausgestellt, dass in Rotationsrichtung hinter der Schneide des Messers drei Nachschneidemesser angeordnet sind. Die Nachschneidemesser bewirken im Zusammenwirken mit den in ihrer unmittelbaren räumlichen Nähe angeordneten Öffnungen die Nachzerkleinerung und Verteilung des Schnittgutes sowie die Reduzierung der Mähgeräusche. Die während des Betriebs auf das Messer auftreffende Luft entweicht durch durch die Öffnungen in den Messerflügeln. Die verbesserte Nachzerkleinerung wird dadurch erzielt, dass die Nachschneidemesser einen Aufstellwinkel gegenüber der Oberfläche des Messerflügels von 30 - 60 Grad, vorzugsweise von etwa 50 Grad aufweisen und der Messerflügel im in Rotationsrichtung hinteren Randbereich eine an sich bekannte Leiteinrichtung aufweist, die bei der Rotation des Messers das Schnittgut aufwirbelt, so dass es nach dem Abschneiden mehrfach in den Bereich der Schneiden des Messerflügels sowie der Schneiden der Nachschneidemesser gelangt. Gegenüber der Ebene des Messerflügels weist der höchste Punkt des abgebogenen Abschnitts einen Abstand von 3 - 15 mm, vorzugsweise 12 mm auf.

Für eine bestmögliche Reduzierung der Mähgeräusche ist es vorteilhaft, wenn jede Öffnung größer als die Oberfläche des Nachschneidemessers ist und deren Form mit der Form des Nachschneidemessers übereinstimmt.

Eine weitere Verbesserung der Nachzerkleinerung wird dadurch erzielt, dass eine in Rotationsrichtung vordere Kante des Nachschneidemessers eine Schneide aufweist, die gegenüber der Schneide des Messerflügels um einen spitzen Winkel im mathematisch positiven Drehsinn verdreht angeordnet ist, wobei der Winkel im Bereich von 20 - 60 Grad, insbesondere bei etwa 35 Grad liegt. Die im mathematisch positiven Drehsinn verdrehte Anordnung der Schneide des Nachschneidemessers bewirkt, dass das Schnittgut in dem Mähgehäuse optimal verteilt wird.

Im Interesse einer kostengünstigen und einfachen Herstellung des Messers ist es vorteilhaft, wenn das Nachschneidemesser integraler Bestandteil des Messerflügels ist. Das Nachschneidemesser kann dann beispielsweise aus dem als Flachstahl ausgebildeten Messerflügel mittels Brennschneiden ausgeschnitten und längs einer Biegelinie nach oben abgebogen werden. Das Schneiden hat zur Folge, dass die Öffnung geringfügig größer als die Oberfläche des ausgeschnittenen Nachschneidmessers ist. Auch die Leiteinrichtung wird vorzugsweise von einem schräg nach oben abgebogenen Abschnitt des Messerflügels gebildet.

Die äußeren Ränder der beiden Messerflügel unterliegen dem höchsten Verschleiß. Um dem damit einhergehenden Verlust an Schneidwirkung entgegenzuwirken ist es in einer Ausführungsform der Erfindung vorgesehen, dass vom äußeren Rand des Messerflügels ein Einschnitt radial zur Rotationsachse des Messers verläuft, dessen in Rotationsrichtung hintere Kante zu einer Schneide geschliffen ist. Verschleißt nun die Schneide des Messerflügels im Randbereich übernimmt zunehmend die Schneide in dem radialen Einschnitt deren Aufgabe. Um die Standzeiten des Messers zu verlängern, ist jedes Nachschneidemesser an seiner Spitze vorzugsweise abgerundet ausgeführt.

Das vorstehend beschriebene, erfindungsgemäße Messer kommt vorzugsweise in einem Sichelmähwerk nach Anspruch 12 zum Einsatz. Zur Verbesserung der Schneidleistung können mehrere, insbesondere zwei Messer im Vertikalabstand übereinander in einem Mähgehäuse angeordnet sein. Für eine einfache Wartung und Reinigung des Sichelmähwerks kann dieses um 90 Grad klappbar an einem Tragarm eines Trägerfahrzeugs angeordnet sein.

Die einzelnen Mähgehäuse des Mähwerks sind vorzugsweise in Radienbauform ausgeführt. Die runde Ausführung des Mähgehäuses reduziert das Gewicht, erhöht die Stabilität und verbessert die Ausputzmöglichkeiten. Selbstverständlich liegt es im Rahmen der Erfindung zusätzlich zu den Nachschneidemessern die von der Schell Grüntechnik an sich bekannten einschraub- bzw. eindrehbaren Einbausätze in dem Mähgehäuse zu montieren.

Sämtliche Schneiden der Messer werden vorzugsweise dadurch gebildet, dass Kanten zu einer Schneide geschliffen werden. Um die Standzeiten zu verbessern, werden die Schneiden induktiv gehärtet.

Die Zuverlässigkeit des erfindungsgemäßen Sichelmähwerks wird dadurch gesteigert, dass jedes einzelne Messer direkt von einen Motor, insbesondere Hydraulikmotor angetrieben wird.

In den einzelnen Mähgehäusen weisen die Messer gegenläufige Messerdrehrichtungen auf, um die Schnittgutverteilung zu optimieren und die Sicherheit zu erhöhen.

Nachfolgend wird die Erfindung anhand der Zeichnungen näher erläutert. Es zeigen
- Figur 1 A,B: eine Vorderansicht auf ein erfindungsgemäßes links bzw. rechts drehendes Messer
- Figur 1 C: eine Seitenansicht auf ein Messer nach Figur 1 B
- Figur 1 D: eine Draufsicht auf ein Messer nach Figur 1B in Richtung des Pfeils A
- Figur 1 E: eine Ansicht eines Nachschneidemessers in Richtung des Pfeils B nach Figur 1 B
- Figur 1 F: eine Ansicht auf ein Nachschneidemesser in Richtung des Pfeils C nach Figur 1 E
- Figur 1 G: eine Ansicht einer Leiteinrichtung in Richtung des Pfeils D nach Figur 1 B
- Figur 1 H: eine Ansicht einer Aufkantung in Richtung des Pfeils F nach Figur 1 B sowie
- Figur 2: eine Abwicklung des Messers nach Figur 1 B sowie eine vergrößerte Darstellung des Details X.

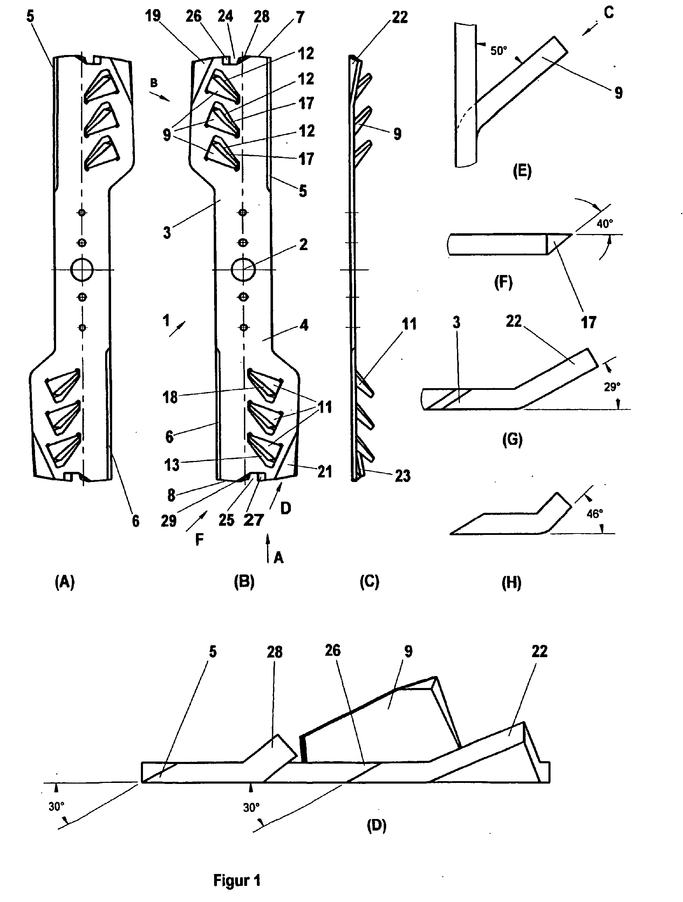

Ein erfindungsgemäßeres Messer 1 ist um eine aufrechte Rotationsachse 2 in einem in den Figuren nicht dargestellten Mähgehäuse eines Sichelmähwerks drehbar gelagert. Das Messer 1 weist zwei Messerflügel 3, 4 auf, deren in Rotationsrichtung vordere Kanten zu Schneiden 5, 6 geschliffen sind. Die Schneiden 5, 6 des rechtsdrehenden Messers nach Figur 1 B sind diametral gegenüberliegend zu den Schneiden 5, 6 des linksdrehenden Messers nach Figur 1 A angeordnet; sie erstrecken sich vom äußeren Rand 7, 8 des Messerflügels 3/4 längs der vorderen Kante, reichen jedoch nicht bis auf Höhe der Rotationsachse 2 heran.

Auf der Oberfläche des Messerflügels 3 und des Messerflügels 4 sind in Höhe der Schneide 5 bzw. 6 jeweils drei Nachschneidemesser 9, 11 angeordnet, denen formgleiche Öffnungen 12, 13 in den Messerflügeln 3, 4 räumlich zugeordnet sind. Eine in Rotationsrichtung des Messers 1 vordere Kante jedes Nachschneidmessers 9, 11 weist eine Schneide 17, 18 auf

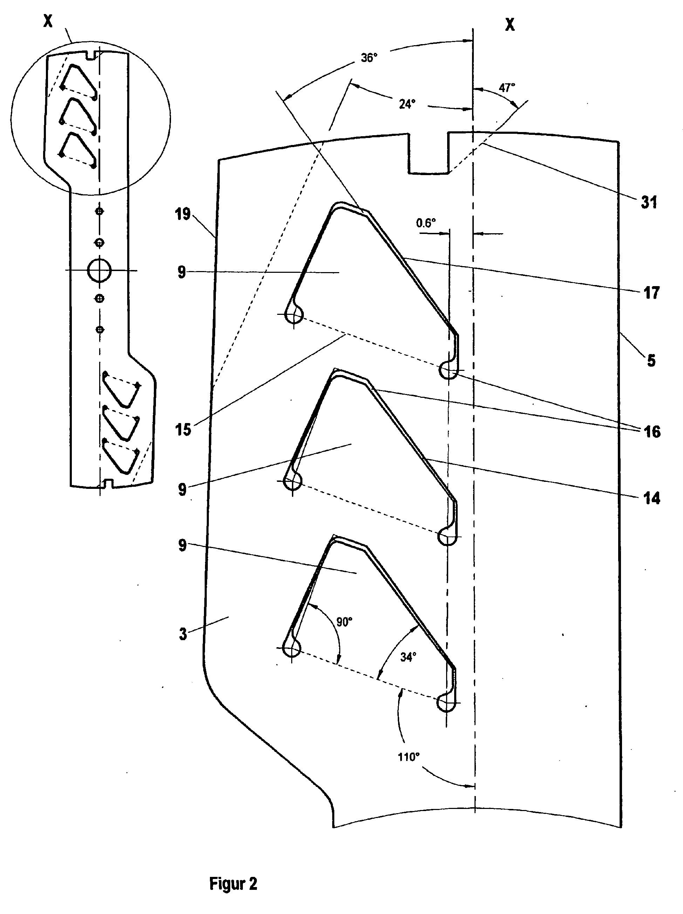

Wie insbesondere aus der Darstellung des Details X in Figur 2 erkennbar, werden die Nachschneidmesser 9, 11 jeweils von einem aus dem Messerflügel 3, 4 geschnittenen Abschnitt 14 gebildet, der längs einer Biegelinie 15 nach oben aus der Flügelebene abgebogen wird, wie dies aus Figur 1 C und Figur 1 D ersichtlich ist. Aufgrund des in Figur 2 angedeuteten Schnittverlustes 16 ist die Öffnung in dem Messerflügel 3, 4 geringfügig größer als die Oberfläche des nach oben abgebogenen Nachschneidmessers 9, 11.

Die Nachschneidemesser 9, 11 weisen gegenüber der Oberfläche der Messerflügel 3, 4 einen Aufstellwinkel von 50 Grad auf. Die Schneiden 17, 18 der Nachschneidmessers 9, 11 sind gegenüber den Schneiden 5, 6 der Messerflügels 3, 4 verdreht angeordnet. Wie insbesondere in Figur 2 zu erkennen, beträgt der Winkel etwa 35 °. Diese Anordnung der Schneiden des Nachschneidemessers in Bezug zu den Schneiden der Messerflügel bewirkt eine optimale Zerkleinerung und Verteilung des Schnittgutes, insbesondere auch bei nassem und hohem Gras. Jeder abgeschnittene Grashalm wird mit dem erfindungsgemäßen Messer in etwa 8 Teile nachzerkleinert, während mit bekannten Messern regelmäßig lediglich eine Nachzerkleinerung des abgeschnittenen Grashalmes in zwei Teile erfolgt.

Zu der wirksamen Nachzerkleinerung des Schnittgutes tragen darüber hinaus die im in Rotationsrichtung hinteren Randbereich 19, 21 der Messerflügel 3,4 in Einbaulage des Messers schräg nach oben en abgebogenen Abschnitte bei, die als Leiteinrichtung 22, 23 wirken. Die Leiteinrichtungen 22, 23 sind gegenüber der Oberfläche des Messers 1 unter einem Winkel von 29 Grad nach oben abgewinkelt; sie tragen dazu bei, dass das Schnittgut aufgewirbelt und mehrfach von den Schneiden 5, 6 sowie den Schneiden 17, 18 zerkleinert wird. Wie insbesondere aus den Figuren 1 D und 1 F ersichtlich, weisen die Schneiden 5, 6 an den Messerflügeln 3, 4 einen Schneidenwinkel von 30 Grad auf, während die Schneiden 17, 18 der Nachschneidemesser einen geringfügig größeren Schneidenwinkel von 40 Grad aufweisen.

Vom äußeren Rand 7, 8 des Messerflügels 3, 4 verläuft ein Einschnitt 24, 25 in Richtung der Rotationsachse 2 des Messers 1. Die in Rotationsrichtung hintere Kante des Einschnitts 24, 25 ist zu einer Schneide 26, 27 geschliffen. In Rotationsrichtung vor der Schneide 26, 27 befindet sich eine Aufkantung 28, 29, die von einem schräg nach oben abgebogenen Abschnitt des Messerflügels 3, 4 gebildet wird. Die Biegelinie 31 der Aufkantung 28 ist in Figur 2 dargestellt. In Verbindung mit dem gebogenen Verlauf des äußeren Randes 7, 8 wird ein vergleichmäßigtes Verschleißverhalten des Messers 1 erzielt.

Das beschriebene Messer erlaubt bei vergleichbarer Schnittleistung gegenüber einem herkömmlichen Messer den Betrieb des Mähwerks mit geringerer Motordrehzahl. Infolgedessen ist der Kraftbedarf am Messer bei vergleichbarer Schneidleistung geringer. Hieraus resultiert eine deutliche Reduktion des Energieverbrauchs in Höhe von etwa 30 %. Gleichzeitig verbessert der Einsatz des Messers in einem Sichelmähwerk die Zerkleinerung und Verteilung des Schnittgutes. Schließlich reduziert der Einsatz des Messers in einem Sichelmähwerk die Mähgeräusche. Zum Nachweis hierfür wurden Vergleichsmessungen bei einer Außentemperatur von 8 Grad Celsius, bewölkt und nassem Gras durchgeführt. Als Trägerfahrzeug kam eine Roberine 1504 D mit einem Mähwerk FSM 3000 H der Schell Grüntechnik zum Einsatz. Getestet wurde bei Motordrehzahlen von 2900, 2200 und 1800 U/min. und einer Ausstattung des Mähwerks mit und ohne Einbausätzen zum Grasmulchen. Die Messungen, die mit Einbausätzen durchgeführt wurden, sind in der nachfolgenden Tabelle durch "Mulch" gekennzeichnet. Aus der Gegenüberstellung der Meßwerte ergibt sich, dass unter sämtlichen Betriebsbedingungen eine erhebliche Geräuschminderung zu verzeichnen ist:

| Motordrehzahl | Messerdrehzahl | db (A) am Fahrerohr ohne Kabine | db (A) am Fahrerohr mit Kabine | db (A) vorbeifahrend in 1 m Entfernung | Ausstattung Mähwerk | Messer |
|---|---|---|---|---|---|---|
| 2900 U/min | 2650 U/min | 98 db(A) | 92 db(A) | 96,5db(A) | Mulch | Standard-Messer |
| 2200 U/min | 2000 U/min | 92 db(A) | 89 db(A) | 91db(A) | Mulch | " |
| 1800 U/min | 1600 U/min | 85,5 db(A) | 85 db(A) | 86 db(A) | Mulch | " |
| 2900 U/min | 2650 U/min | 95 db(A) | 90 db(A) | 96 db(A) | ohne Mulch | " |
| 2200 U/min | 2000 U/min | 86 db(A) | 88 db(A) | 88 db(A) | ohne Mulch | " |
| 1800 U/min | 1600 U/min | 85 db(A) | 85db(A) | 84,5 db(A) | ohne Mulch | " |
| 2900 U/min | 2650 U/min | 93,5 db(A) | 88,5 db(A) | 93,5 db(A) | Mulch | Neues Messer |
| 2200 U/min | 2000 U/min | 86db(A) | 85 db(A) | 86 db(A) | Mulch | " |
| 1800 U/min | 1600 U/min | 82db(A) | 84 db(A) | 82 db(A) | Mulch | " |
| 2900 U/min | 2650 U/min | 89db(A) | 87,5 db(A) | 90 db(A) | ohne Mulch | " |
| 2200 U/min | 2000 U/min | 85db(A) | 85db(A) | 84 db(A) | ohne Mulch | " |
| 1800 U/min | 1600 U/min | 82db(A) | 82 db(A) | 82 db(A) | ohne Mulch | " |

### Bezugszeichenliste

| **Nr.** | **Bezeichnung** | **Nr.** | **Bezeichnung** |
|---|---|---|---|
| 1. | Messer | 26. | Schneide |
| 2. | Rotationsachse | 27. | " |
| 3. | Messerflügel | 28. | Aufkantung |
| 4. | " | 29. | " |
| 5. | Schneide | - | |
| 6. | " | 31. | Biegelinie |
| 7. | äußerer Rand | | |
| 8. | " | | |
| 9. | Nachschneidemesser | | |
| 10. | - | | |
| 11. | Nachschneidemesser | | |
| 12. | Öffnung | | |
| 13. | Öffnung | | |
| 14. | geschnittener Abschnitt | | |
| 15. | Biegelinie | | |
| 16. | Schnittverlust | | |
| 17. | Schneide | | |
| 18. | " | | |
| 19. | Randbereich | | |
| 20. | - | | |
| 21. | Randbereich | | |
| 22. | Leiteinrichtung | | |
| 23. | " | | |
| 24. | Einschnitt | | |
| 25. | " | | |

## Patentansprüche

1. Messer für ein Sichelmähwerk mit mindestens zwei Messerflügeln, deren in Rotationsrichtung vordere Kanten eine Schneide aufweisen, wobei auf der Oberfläche jedes Messerflügels (3, 4) in Höhe der Schneide (5, 6) mindestens zwei Nachschneidemesser (9, 11) angeordnet sind und jedem Nachschneidemesser eine Öffnung (12, 13) in dem Messerflügel zugeordnet ist
**dadurch gekennzeichnet,**
- **dass** jedes Nachschneidemesser (9, 11) einen Aufstellwinkel gegenüber der Oberfläche des Messerflügels von 30° - 60 aufweist,
- **dass** jeder Messerflügel (3, 4) im in Rotationsrichtung hinteren Randbereich (19, 21) eine Leiteinrichtung (22, 23) aufweist und
- die Leiteinrichtung (22, 23) von einem aus der Flügelebene nach oben abgebogenen Abschnitt des Messerflügels gebildet wird, wobei der höchste Punkt des abgebogenen Abschnitts gegenüber der Ebene des Messerflügels einen Abstand von 3 - 15 mm aufweist und die Biegelinie schräg zur Längsachse des Messers vom äußeren Rand (7,8) zum hinteren Randbereich (19,22) des Messerflügels (3,4) verläuft.

2. Messer nach Anspruch 1, **dadurch gekennzeichnet, dass** die Öffnung (12, 13) größer als die Oberfläche des Nachschneidemessers (9, 11) ist und deren Form mit der Form des Nachschneidemessers übereinstimmt.

3. Messer nach Anspruch 1 oder 2, **dadurch gekennzeichnet, dass** das Nachschneidemesser (9, 11) einen Aufstellwinkel gegenüber der Oberfläche des Messerflügels von etwa 50° aufweist.

4. Messer nach einem der Ansprüche 1 bis 3, **dadurch gekennzeichnet, dass** eine in Rotationsrichtung vordere Kante des Nachschneidemessers (9, 11) eine Schneide (17, 18) aufweist, die gegenüber der Schneide (5, 6) des Messerflügels (3, 4) um einen spitzen Winkel im mathematisch positiven Drehsinn verdreht angeordnet ist.

5. Messer nach Anspruch 4, **dadurch gekennzeichnet, dass** der Winkel im Bereich von 20° bis 60° liegt.

6. Messer nach einem der Ansprüche 1 bis 5, **dadurch gekennzeichnet, dass** das Nachschneidemesser (9, 11) integraler Bestandteil des Messerflügels (3, 4) ist.

7. Messer nach Anspruch 6, **dadurch gekennzeichnet, dass** das Nachschneidmesser (9, 11) von einem aus dem Messerflügel geschnittenen und aus der Flügelebene abgebogenen Abschnitt (14) gebildet wird.

8. Messer nach einem der Ansprüche 1 bis 7, **dadurch gekennzeichnet, dass** das Nachschneidemesser (9, 11) eine im wesentlichen dreieckige Form aufweist und ist an seiner Spitze abgerundet ausgeführt ist.

9. Messer nach einem der Ansprüche 1 bis 8, **dadurch gekennzeichnet**, das vom äußeren Rand (7, 8) des Messerflügels (3, 4) ein Einschnitt (24, 25) radial zur Rotationsachse (2) des Messers (1) verläuft, dessen in Rotationsrichtung hintere Kante zu einer Schneide (26, 27) geschliffen ist.

10. Sichelmähwerk mit mindestens einem in Betriebsstellung in mindestens einem Mähgehäuse um eine aufrechte Rotationsachse rotierend angetriebenen Messer, **gekennzeichnet durch** Messer (1) nach einem oder mehreren der Ansprüche 1 bis 9.

11. Sichelmähwerk nach Anspruch 10, **dadurch gekennzeichnet, dass** mehrere Messer (1) in einem Mähgehäuse im Vertikalabstand übereinander angeordnet sind.

12. Sichelmähwerk nach Anspruch 10 oder 11,**dadurch gekennzeichnet, dass** das Sichelmähwerk klappbar an einem Tragarm eines Trägerfahrzeugs angeordnet ist.

## Claims

1. A blade for a lawnmower having at least two blade wings whose front edges in the direction of rotation have a cutting edge such that at least two shredding blades (9, 11) are arranged on the surface of each blade wing (3, 4) at the height of the cutting edge (5, 6) and an opening (12, 13) in the blade wing is assigned to each shredding blade,
**characterized in that**
- each shredding blade (9, 11) is set at an angle of pitch 30 to 60 degrees to the surface of the blade wing,
- each blade wing (3, 4) has a baffle device (22, 23) in the rear edge area (19, 21) in the direction of rotation and
- the baffle device (22, 23) is formed by a section of the blade wing that is bent upward out of the plane of the wing, whereby the highest point of the turned-up section is a distance of 3-15 mm from the plane of the blade wing, and the bending line runs obliquely to the longitudinal axis of the blade from the outer edge (7, 8) to the rear edge area (19, 21) of the blade wing (3, 4).

2. The blade according to Claim 1,
**characterized in that**
the opening (12, 13) is larger than the surface area of the shredding blade (9, 11) and its shape corresponds to the shape of the shredding blade.

3. The blade according to Claim 1 or 2,
**characterized in that**
the shredding blade (9, 11) has an angle of pitch of approximately 50 degrees with respect to the surface of the blade wing.

4. The blade according to any one of Claims 1 through 3,
**characterized in that**
a front edge in the direction of rotation of the shredding blade (9, 11) has a cutting edge (17, 18), which is arranged so that it is rotated in a positive sense mathematically by an acute angle in comparison with the cutting edge (5, 6) of the blade wing (3, 4).

5. The blade according to Claim 4,
**characterized in that**
the angle is in the range of 20 degrees to 60 degrees.

6. The blade according to any one of Claims 1 through 5,
**characterized in that**
the shredding blade (9, 11) is an integral component of the blade wing (3, 4).

7. The blade according to Claim 6,
**characterized in that**
the shredding blade (9, 11) is formed by a section (14) that is cut out of the blade wing and is bent up out of the plane of the wing.

8. The blade according to any one of Claims 1 through 7,
**characterized in that**
the shredding blade (9, 11) has an essentially triangular shape and is designed to be rounded at its tip.

9. The blade according to any one of Claims 1 through 8,
**characterized in that**
a cutout (24, 25) runs radially from the outer edge (7, 8) of the blade wing (3, 4) to the axis of rotation (2) of the blade (1), the rear edge of this cutout in the direction of rotation being ground to a cutting edge (26, 27).

10. The lawnmower having at least one blade driven to rotate about an upright axis of rotation in its operating position in at least one mower housing,
**characterized by**
blades (1) according to any one or more of Claims 1 through 9.

11. The lawnmower according to Claim 10,
**characterized in that**
several blades (1) are arranged one above the other with a vertical distance between them in a mower housing.

12. The lawnmower according to Claim 10 or 11,
**characterized in that**
the lawnmower is arranged to be foldable on a carrying arm of a carrier vehicle.

## Revendications

1. Couteau pour tondeuse à faucille, avec au moins deux ailes de couteau, dont les bords avant dans le sens de rotation comportent un tranchant, au moins deux lames de paillage (9, 11) étant disposées à la surface de chacune des ailes de couteau (3, 4), à la hauteur des tranchants (5, 6), et une ouverture (12, 13) étant attribuée à chacune des lames de paillage dans l'aile de couteau,
**caractérisé en ce que**
- chacune des lames de paillage (9, 11) présente un angle de montage compris entre 30° et 60° par rapport à la surface de l'aile de couteau,
- chacune des ailes de couteau (3, 4) comporte un dispositif de guidage (22, 23) dans la région de bord arrière (19, 21) dans le sens de rotation, et
- le dispositif de guidage (22, 23) est constitué d'un segment d'aile de couteau coudé en biais vers le haut à partir de la surface de couteau, le point le plus élevé du segment coudé présentant un écart de 3 à 15 mm par rapport à la surface de l'aile de couteau, et la ligne de flexion s'étend en biais par rapport à l'axe longitudinal du couteau, du bord extérieur (7, 8) vers la région de bord arrière (19, 21) de l'aile de couteau (3, 4).

2. Couteau selon la revendication 1, **caractérisé en ce que** les ouvertures (12, 13) sont plus grandes que les surfaces des lames de paillage (9, 11) et leur forme correspond à la forme des lames de paillage.

3. Couteau selon la revendication 1 ou 2, **caractérisé en ce que** les lames de paillage (9, 11) présentent un angle de montage d'environ 50° par rapport à la surface des ailes de couteau.

4. Couteau selon l'une des revendications 1 à 3, **caractérisé en ce que** les bords avant des lames de paillage (9, 11) dans le sens de rotation comportent des tranchants (17, 18), qui sont disposés de façon déviée par rapport aux tranchant (5, 6) des ailes de couteau (3, 4), selon un angle aigu dans le sens de rotation positif au sens mathématique.

5. Couteau selon la revendication 4, **caractérisé en ce que** l'angle est compris entre 20° et 60°.

6. Couteau selon l'une des revendications 1 à 5, **caractérisé en ce que** les lames de paillage (9, 11) font partie intégrante des ailes de couteau (3, 4).

7. Couteau selon la revendication 6, **caractérisé en ce que** les lames de paillage (9, 11) sont conçues à partir d'un segment (14) découpé dans les ailes de couteau et coudé à partir de la surface d'aile.

8. Couteau selon l'une des revendications 1 à 7, **caractérisé en ce que** les lames de paillage (9, 11) possèdent une forme essentiellement triangulaire est sont arrondies à leur pointe.

9. Couteau selon l'une des revendications 1 à 8, **caractérisé en ce que** des entailles (24, 25) s'étendent depuis les bords extérieurs (7, 8) des ailes de couteau (3, 4), de façon radiale par rapport à l'axe de rotation (2) du couteau (1), le bord arrière des entailles dans le sens de rotation étant aiguisé à la façon de tranchants (26, 27).

10. Tondeuse à faucille avec au moins un couteau entraîné en position de fonctionnement de manière rotative autour d'un axe de rotation vertical dans au moins un carter de tondeuse, **caractérisée en ce qu'**elle comporte le couteau (1) selon l'une ou plusieurs des revendications 1 à 9.

11. Tondeuse à faucille selon la revendication 10, **caractérisée en ce que** plusieurs couteaux (1) sont disposés les uns au-dessus des autres de façon verticalement espacée dans un carter de tondeuse.

12. Tondeuse à faucille selon la revendication 10 ou 11, **caractérisé en ce que** la tondeuse à faucille est disposée de façon à pouvoir pivoter sur un bras porteur d'un véhicule porteur.
